Europäisches Patentamt

European Patent Office

Office européen des brevets

(19)

(11) **EP 1 705 824 A2**

(12) **EUROPEAN PATENT APPLICATION**

| | |
|---|---|
| (43) Date of publication:<br>**27.09.2006 Bulletin 2006/39** | (51) Int Cl.:<br>**H04L 5/14** (2006.01) |

(21) Application number: **05020639.0**

(22) Date of filing: **22.09.2005**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU** | (71) Applicant: **Andrew Telecommunication Products S.r.l.**<br>**20041 Agrate Brianza MI (IT)** |
| (30) Priority: **21.03.2005  IT   mi20050462** | (72) Inventor: **Vannucchi, Alessandro**<br>**20040 Velate (IT)** |
| | (74) Representative: **Incollingo, Italo**<br>**Piazzale Lavater, 3**<br>**20129 Milano (IT)** |

(54) **High-speed bidirectional full-duplex cable interface**

(57)     The invention relates to a method for transmitting high-speed digital signals and a DC signal over the same physical transmission line interconnecting two devices; the high-speed signals are transmitted in both directions (bi-directional), at the same time (full-duplex) and on the same bandwidth. At the transmit side the digital signal is properly multilevel encoded, converted into an analog signal, filtered and amplified before being sent over the cable. At the receive side the upstream and downstream signals are first sampled, then digitally isolated one from the other and the resulting signal is digitally equalized and properly multistage decoded.

Fig. 1

**Description**

**FIELD OF THE INVENTION**

The invention relates to a high-speed bidirectional full-duplex cable interfacing method, especially for applications where also a DC component is present for powering remote devices. More particularly the invention relates to a cable interface system where high-speed signals in the two directions (upstream and downstream) and also said DC component (generally used for powering remote devices) have to be transmitted over a physical line such as a coaxial cable.

**BACKGROUNG OF THE INVENTION**

There are applications where two devices must exchange high-speed data and one of the two must be remotely powered, too. In these applications is suitable to use a single cable (usually a coaxial cable) carrying both data and power. Data are generally encoded with particular line codes, since they must exhibit particular spectral properties, the most important one being to minimize the spectral components near the DC. Two-way operation can be achieved either modulating on two different frequencies the upstream and downstream signals (i.e. through Frequency Division Multiplexing, FDM), or overlapping the two signals on the same frequency band and then decoupling them using "hybrids". The second method is widely used in telephone networks, where signals are low frequency ones. The reason is that the latter is a less expensive solution and since the signals are not modulated (baseband signals) they occupy the lower portion of the frequency spectrum on the cable, consequently they experience a lower attenuation and (if the spectrum is sufficiently narrow) a lower in-band distortion. For high speed signals the problem becomes rather to have wideband hybrids, i.e. to obtain a good decoupling of the two signals over a wide frequency range.

**Description of the related art**

High-speed cable modems are widely used for delivering data over cables, but this implies a modulation process, a diplexer filter for separating the two (or more) signals and a demodulation process. These systems consequently are generally quite expensive because of their complexity. In applications with limited data rates, bidirectional coaxial systems can borrow a technique from the telephone network: telephones incorporate "hybrid circuits" based on transformers, which halve the cost of cable by enabling transmission and reception on the same twisted pair. For voice frequencies one can build such voice-band circuits easily with common operational amplifiers, but for wider bandwidths one would need high-speed amplifiers with an extremely good high frequency CMRR (Common Mode Rejection Ratio) and well-controlled impedances. Another problem is the signal distortion introduced by the transmission over the cable: the longer the cable the higher the distortion. High-speed analog equalizers are available on the market, but their performance strongly depends on the line code used. No analog ICs incorporating both the canceling function (the wideband hybrid) and the equalizing function (for the distortion compensation) are so far available.

Besides, no fully digital interfaces have been so far developed, and therefore bidirectional cable interfaces using wideband hybrids must undergo a tuning process because of the poor repeatability of the analog circuitry.

**SUMMARY OF THE INVENTION**

The first object of the present invention is to provide a method for transmitting high-speed digital signals in the two directions over the same physical line, at the same time and on the same bandwidth, eliminating the inconveniences of the prior Art and therefore particularly advantageous. In one embodiment the new method essentially comprises at least the steps of: - at he transmit side, processing the digital signal with a proper multilevel encoding; - at the receive side, digitally separating the transmitted and received signals; and - digitally equalizing said received signal; and - properly decoding said equalized signal.

The second object of the present invention is to provide a system to embody the above method, which is simple, effective, reliable and low-cost. In one embodiment the high-speed bidirectional full duplex cable interface system according to the invention comprises at least: - a multilevel encoder sub-system; - an adaptive digital canceler sub-system; - an adaptive digital equalizer; - a multistage decoder sub-system; and - a clock recovery circuit.

The other features of the invention are recited in the appended claims, which are considered herewith incorporated.

Briefly the aim of the invention is to provide a high speed bidirectional full-duplex cable interface architecture having the following characteristics:

- The upstream and downstream signals occupy the same bandwidth (signals overlap in the baseband region of the frequency spectrum).

- It employs multilevel signal encoding in a way that the outer levels are encoded with codes having particular spectral properties in order to properly shape the signal spectrum, while the inner levels are protected with FEC (Forward Error Correction) encoders.
- A DC component is also present on the cable.
- The extraction of one signal from the other (the decoupling of the downstream from the upstream) is fully realized in the digital domain, as well as the equalization and all the relative processing.

Let us recall that high speed bidirectional cable interfaces are so far implemented with cable modems. Lower speed interfaces using "hybrid circuits" are indeed achievable but wideband signals suffer from lack of equalization and a poor decoupling between upstream and downstream signals due to the imperfection of the analog devices used for the cancellation. With the proposed invention the cancellation process is achieved digitally. Besides, the use of MLC (multi level coding) enhances both spectrum properties and correction capabilities. The use of adaptive equalization on the receiver compensates for the distortion introduced by the cable and allows for longer distances to be covered without repeaters. Basically, with a good design of the proposed interface, there are very low limitations to the speed of the signals and to the achievable cable length.

More precisely, the benefits arising from the invention are:

1. Support of significantly higher bit rates and longer cables with respect to conventional systems based on analog hybrids.
2. Lower cost and lower complexity with respect to high speed systems using cable modems.
3. All the core functions are implemented in the digital domain
4. The residual analog parts are minimized (no tuning needed).

**Brief Description of the Drawings**

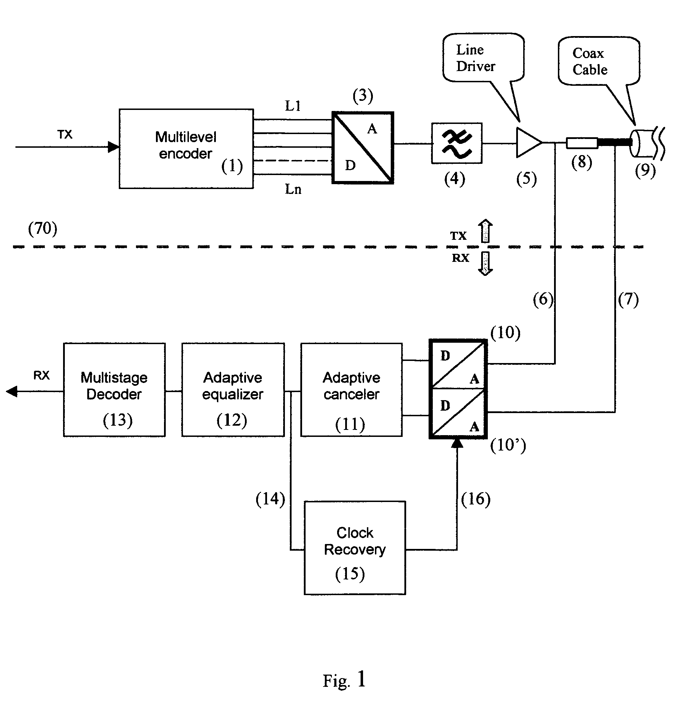

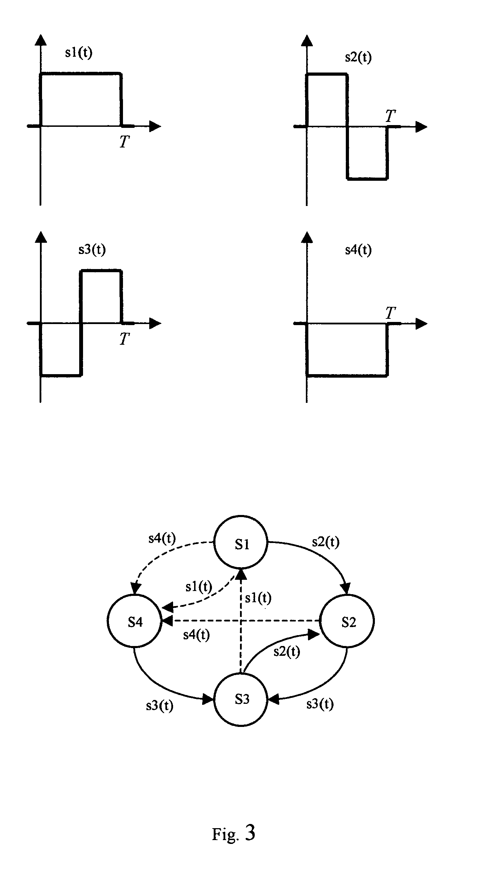

However the main advantages and features of the invention will be better explained from the following description of the embodiment and in the attached figures 1, 2, 6, 8, 9, and 11 which are block-diagrams of the invention or part of it, as well as in the related figures 3, 4, 5, 10 and 12.

**DETAILED DESCRIPTION OF THE PREFERRED EMBODIMENT**

In figure 1 the general block diagram of the invention is shown.

"Equivalent" implementations, providing the same characteristics and functionalities herein explained, are obviously possible.

Briefly, the transmit signal TX undergoes: - a multilevel encoding in the encoder (1); - the so encoded signals are converted into analog signals in the D/A converter (3), filtered in (4), amplified in (5), the amplified signal (6) is fed, in the receive section, into the D/A converter (10), while the cable received signal is fed into the D/A converter (10'), the signals from (10) and (10') undergo an adaptive cancellation in (11); the output signal (14) of the canceler is equalized in (12) and multistage decoded in (13); at the output of the multistage decoder the RX signal is obtained. The clock-recovery (15) is obtained from the information carried out from the signal (14) at the output of the canceler (11).

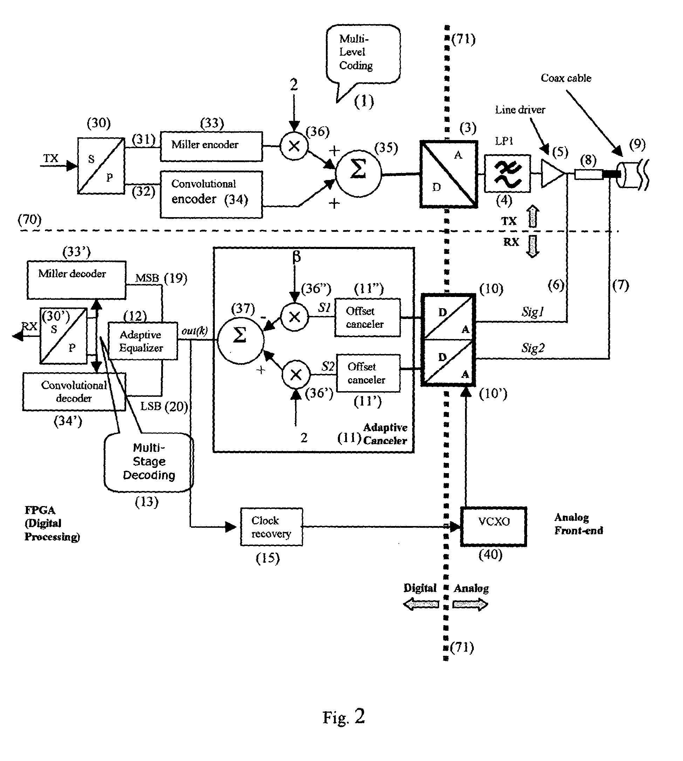

In the following sections the implementation of the invention will be described in the particular case of a four level type of coding. There are theoretically no limitations to the number of usable levels, but practical reasons suggest not to significantly increase that number, because the increased implementation complexity would not be justified by the benefits obtained. In the figure 1 and 2 the line (70) shows the separation between transmit TX and receive RX sections and the line (71) in figure 2 marks the separation between the digital and analog portion of the circuitry.

With reference to figure 2, the system is composed of a digital processing device (an FPGA, Field Programmable Gate Array), a digital to analog converter D/A (3), a low-pass filter LP1 (4), a line driver (5) followed by the cable matching resistor (8), a dual analog to digital converter A/D (10), (10'), a Voltage Controlled Crystal Oscillator VCXO (40) and the coaxial cable (9). The latter components constitute the analog front-end (see figure 2, line (71)).

**- Transmit side**

The binary data to be transmitted are serial to parallel converted in (30). One of the two signals (31) at the output of the converter (30) is Miller encoded in (33).

The exemplary embodiment we are discussing uses a Miller-type multilevel line coding, although other basic line coding schemes could naturally be used for the same purpose.

The Miller code (or delay modulation) can be represented through a modulation with memory. Four baseband signals are available. Which one is transmitted depends both on the present digit and on the previous transmitted signal. The encoding rule can be followed on the encoder state diagram of figure 3, where also the four baseband waveforms are shown. Each state is identified by the label of the previously transmitted signal. Each transition between two states is represented with a solid arrow if a "one" is to be encoded and with a dashed arrow if for a "zero". The label on each arrow indicates the generated signal.

Miller code shows favourable spectral properties, namely:

■ Most of signal power is located in a narrow-band region around frequency 0.4 Fs, where Fs is the symbol frequency;
■ DC coupling is low.

The first property is important because the narrower the power spectrum of the signal the lower is the in-band distortion due to the cable; the second property is useful since the cable interface must be AC coupled (the coaxial cable also carries DC power to other devices).

The other signal (32) at the output of the serial to parallel converter (30) is encoded with a convolutional code in (34). The encoder rate R is ½. In fact the Miller encoding halve the bit period. Using an encoding rate R=½, the two resulting signals (Miller and convolutional) are synchronous and thus can be easily summed in (35) for generating a four-level signal. The constraint length of the convolutional code (34) can be chosen in order to compensate for the losses in error performance of multilevel encoding. In fact, there is a difference of 6dB in terms of error performance between a two-level and a four-level signals. For instance, if a constraint length of 7 (64 states) is chosen, the asymptotic coding gain (soft decoded) of a convolutional code with R=½ is 7dB; The convolutionally encoded signal exhibit no particular spectral properties, being an NRZ signal.

The two encoded signal are added to generate a four-level signal. The most significant bits MSB of the signal are the Miller encoded ones (33) (which we'll call the "outer code") while the less significant bits (LSB) are the convolutionally encoded bits ("inner code") (34). This is represented in the diagram of figure 2 by the times two multiplication (36) of the signal at the output of the Miller encoder (33).

The resulting four level signal is sent to a digital to analog converter D/A (3). Note that the inner bits (34) are more protected than the outer bits (33). Note also that the digital to analog converter (3) can be easily replaced with an operational amplifier (not represented).

The spectrum (45) at the output of the converter (3) is the weighted sum of the spectrums (43) and (44) of the signals before the addition, since the two signals are uncorrelated. The amplitude of the Miller encoded signal (33) is twice the amplitude the convolutional encoded signal (34), that means that in terms of power spectrum, the Miller signal weights four times. This results in a spectrum (45) showing good properties in terms of line codes, i.e. low DC components and a quite concentrated signal power.

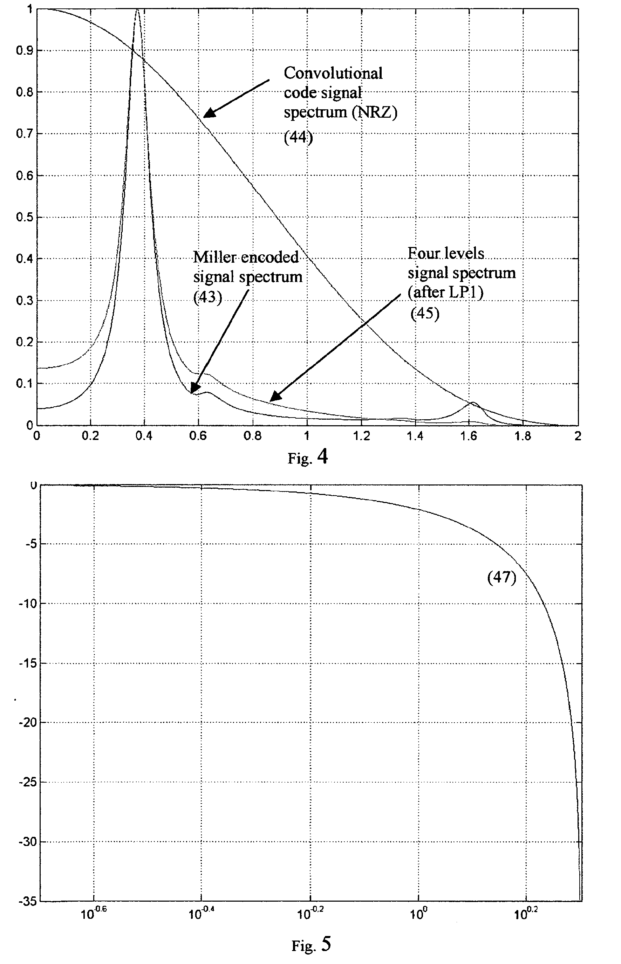

Figure 4 shows said signals spectrum (43), (44) and (45), normalized to their peak amplitude..

The four-level signal is filtered with the low-pass filter LP1 (4), whose transfer function (47) is shown in figure 5.

The low pass filter (4) realizes on the NRZ signal a raised cosine shaping with roll-off equal to 1 and already incorporates the 1/sinc correction. The filter is not affecting the Miller encoded signal (33) due to its limited spectral extension, so the overall four-level signal is not affected by intersymbol interference. Note that in both the figures 4 and 5, the abscissa is the normalized symbol frequency.

**- Receive side**

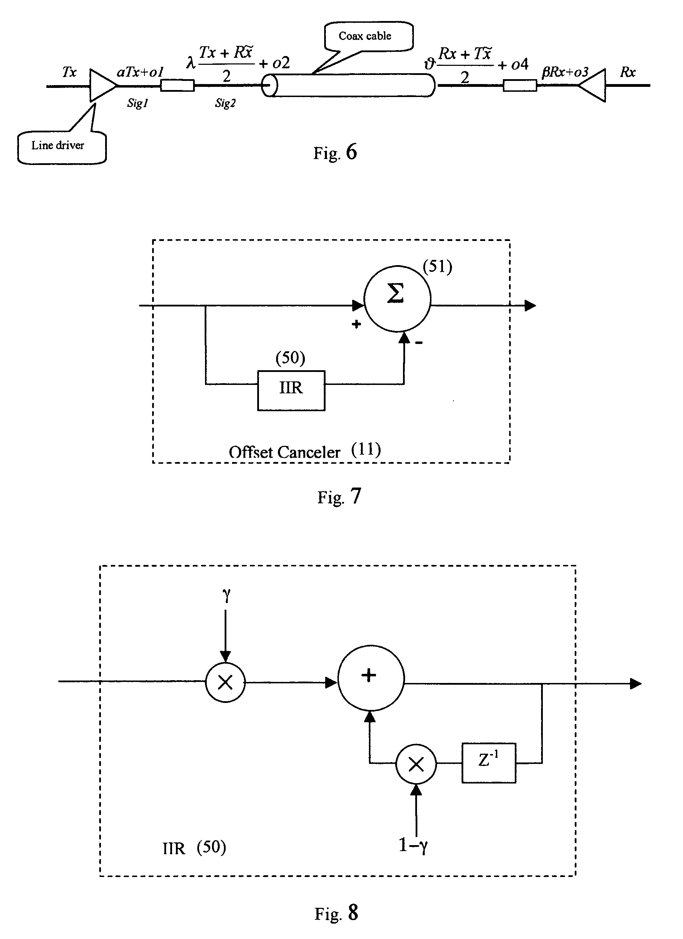

After the line driver (5) two signals *Sig1* and *Sig2* are sampled on the lines (6) and (7): the signal *Sig1* at the output of the line driver (5) and the signal *Sig2* on line (7) after the cable matching resistor (8). With reference to figure 6: the signal at the output of the line driver *(Sig1)* is the signal that is going to be transmitted on the cable, while the signal after the matching resistance *(Sig2)* is the sum of the received and transmitted signal divided by two.

The received signal is distorted due to the cable. The distortion is indicated by the suffix "~".

The following relations hold:

$$sig1 = \alpha \cdot Tx + o1$$

$$sig2 = \lambda \cdot \frac{Tx + R\tilde{x}}{2} + o2$$

where $R\tilde{x}$ is the distorted and attenuated received signal, $\alpha$ and $\lambda$ are two constants to take into account for the two different paths of the signals and thus for two possible different gains and o1 and o2 are two offset values.

*Offset Canceler*

The two sampled signals go through two different offset cancelers (11'), (11"). The offset cancelers remove the residual DC components o1 and o2. Each offset canceler is realized with a IIR filter (50) and an adder E (51) (figure 7).

The IIR has a transfer function $H(z) = \dfrac{\gamma}{1 - z^{-1}(1 - \gamma)}$ and is realized by the structure shown in figure 8.

The value of y must be sufficiently small for averaging the input signal for "long times" with respect to the symbol frequency.

With reference to figure 2, at the output of the offset cancelers (11'), (11") the two signals can be written as (no dc component):

$$S1(k) = \alpha \cdot Tx(k)$$

$$S2(k) = \lambda \cdot \frac{Tx(k) + R\tilde{x}(k)}{2}$$

where k is the sampling instant.

*Adaptive signal canceler*

Signal S1(k) goes through a gain control chain (36"), while the signal S2(k) is times two multiplied in (36'). The signal out(k) after the subtraction $\Sigma$ (37), will be:

$$out(k) = \lambda \cdot R\tilde{x}(k) + \lambda \cdot Tx(k) - \beta \cdot \alpha \cdot Tx(k)$$

The task is to obtain:

$$out(k) = \lambda \cdot R\tilde{x}(k)$$

The recursion for the calculation of $\beta$ is based on the <u>minimization of the correlation</u> between the signal S1(k) and the signal out(k), and is the following:

$$\beta_{k+1} = \beta_k + \varepsilon \cdot S1(k) \cdot out(k)$$

where $\varepsilon$ is a constant equals to more or less 1/1000 of the peak amplitude of S1. To increase the speed of convergence the initial value of $\varepsilon$ can be initially set to a higher value, for instance 1/50 of S1; at each iteration this value is decreased until the final value (1/1000* S1) is reached.

At the end of the iteration a stable value for $\beta$ is found, and <u>out(k) will be a replica of the signal $R\tilde{x}$ (k) apart from a gain factor $\lambda$.</u>

*Equalizer*

The equalizer function is to compensate for the distortion introduced by the cable 9.

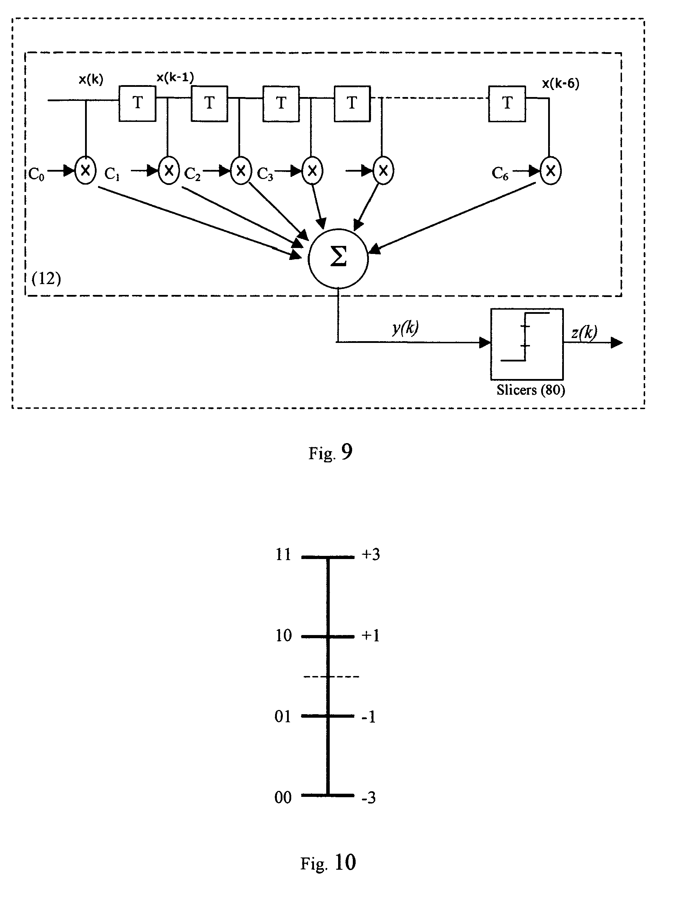

In figure 9 its structure is reported.

The number of the taps of the equalizer (12) depends on the cable length and on the baud rate.

From simulations it has been determined that for 300 meters of a standard RG213 coaxial cable and a bit rate of 155Mbit/s, seven taps are sufficient.

As a equalizing algorithm the SATO's algorithm has been chosen. This is a "blind" algorithm, avoiding the need of any training sequence for the equalizer convergence. The only problem is the residual MSE (mean square error), that is quite high even when convergence is reached. To overcome this drawback, once the coefficients C0 - C6 are stable, it's possible to switch to a decision-directed algorithm.

The coefficient recursion is expressed in general as follow, *(c(k)* being the coefficient values, x(k) are the input symbols to the equalizer):

$$c_n(k+1) = c_n(k) - \alpha \cdot e_n(k) \cdot x(k-n)$$

where $\alpha$ is a proper step-size.

In SATO's algorithm $e_n(k)$ takes the form:

$$e_n(k) = x(k-n) - \gamma \cdot \mathrm{sgn}(x(k-n))$$

where $\gamma = \dfrac{E\{|a(k)|^2\}}{E\{|a(k)|\}}$, and $E\{\}$ is the expected value and a(k) are the symbols at the transmitter.

In a decision-directed mode (LMS algorithm) $e_n(k)$ takes the form:

$$e_n(k) = \mathrm{sgn}(y(k) - z(k))$$

where *y(k)* are the symbols at the output of the equalizer (12) and *z(k)* are the symbols after the slicers (80) (after being "decided").

Since no phase distortion is introduced from the cable but just amplitude distortion, the equalizer (12) will have the coefficients symmetrical to the central one. This property can be exploited to decrease the logic used in the coefficient computation imposing the coefficients symmetry. Actually it is sufficient to compute only C0, C1, C2 and the central coefficient C3. Then impose C6=C0, C5=C1, C4=C2.

*Decoding (Multi-Stage Decoding)*

As already mentioned, only the less significant bits (LSBs) are convolutionally encoded, while the most significant bits (MSBs) are Miller encoded. The Miller code doesn't exhibit any particular error correcting property, but taking into account the corrections on the LSB a correction can be performed also on the MSB. This technique is called *Multi-Stage Decoding (MSD)*.

The transmitted bits are mapped as shown in figure 10.

The highest probability of error on the MSB occurs if the symbol 01 is erroneously interpreted as the symbol 10.

In this case both bits (MSB and LSB) are errored. Both codes have error correcting properties (the convolutional code is much more powerful, of course), so before making a decision it must wait and check if one of the two codes have detected an error.

The following conditions must be verified:

1. The signal at the output of the equalizer (before the decision) lies between the values assigned to the symbols 01 and 10 (i.e. the analog values -1 and +1)
2. the LSB has been corrected
3. the MSB has been corrected

If all the conditions apply, then both codes have detected and corrected an error

If only conditions 1 and 2 apply then the MSB must be inverted

If only conditions 1 and 3 apply, then the LSB must be inverted

(The last case is the least likely one).

It should be noted that the convolutional code can be "soft" decoded for a maximum error correcting performance.

*Clock Recovery*

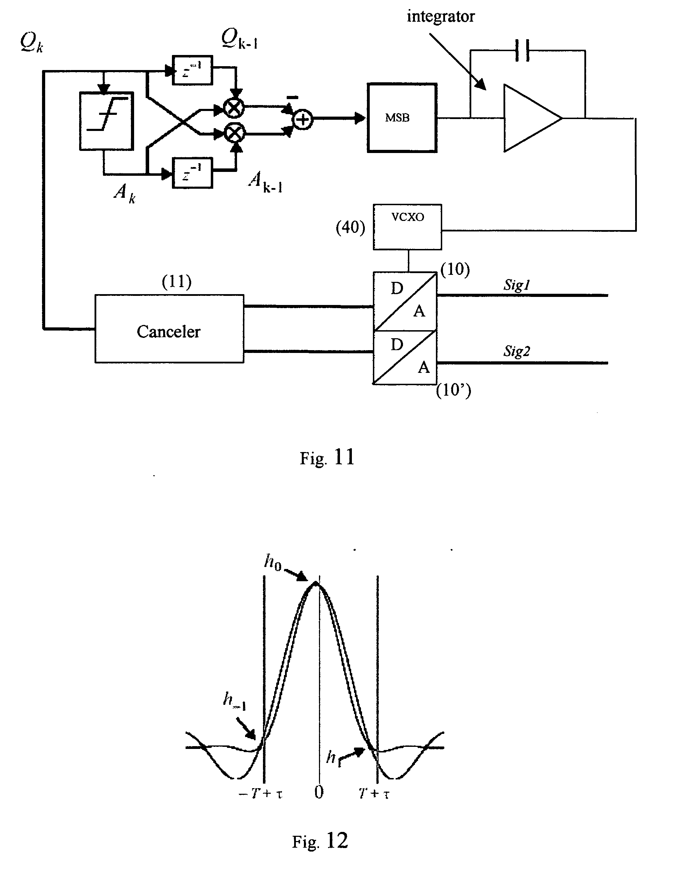

The clock recovery circuit 15 is based on the minimization of the received MSE (Mean Square Error). It works at symbol rate. The block diagram of the clock recovery circuit is shown in figure 11.

$Q_k$ is the signal after the canceler 11, $A_k$ is $Q_k$ after being sliced ($A_k$ is the decision made on $Q_k$

For sampling done at symbol-rate, MMSE (Minimum Mean Square Error) timing recovery can be used, base it on impulse response (figure 12).

Since only amplitude distortion is present, an Early-Late scheme is demonstrated to be more efficient since is insensitive to amplitude distortion.

In an Early-Late scheme, for minimizing the MSE the sampling instant must be adjusted so:

$$h_1 - h_{-1} = 0$$

What we need is to know $h_1$ and $h_{-1}$. We can obtain these values by evaluating the impulse response of the signal.

To get the impulse response estimates, we can cross correlate the received signals with the received symbols.

In fact:

$$Q(t) = \sum_m A_m h(t - mT) + n(t)$$

Sampled at time $kT + \tau$, we have:

$$Q_k \equiv Q(kT + \tau)$$
$$= \ldots + A_{k-1}h(kT + \tau - (k-1)T) + A_k h(kT + \tau - kT) + \ldots$$
$$= \ldots + A_{k-1}h_1(\tau) + A_k h_0(\tau) + A_{k+1}h_{-1}(\tau) + \ldots$$

where:

$$h_k(\tau) \equiv h(kT + \tau)$$

To estimate $h_1(\tau)$, $Q_k \cdot A_k$ can be used. In fact, since $A_{k-1}$ is uncorrelated with $A_j$ when $k \neq j$, all other terms go to zero.

To estimate $h_{-1}(\tau)$, $Q_{k-1} \cdot A_k$ can be used.

Once $h_1$ and $h_{-1}$ have been estimated, we can force them to be equal by moving the sampling instant. This is done by subtracting $h_{-1}$ from $h_1$ and then integrating the sign of the subtraction. These signal will drive the VCXO to move to the proper sampling phase.

## CONCLUSIONS AND SIMULATION RESULTS

To better highlight the advantages allowed by the proposed invention a simulation program has been run, able to compare the herein suggested system against a "conventional" system, based on a 2-level code and on the usual wideband analog hybrid arrangement.

For the "conventional" system, an ultra fast commercial Operational Amplifier (Analog Devices - AD8001) has been selected, using all the nominal parameters of relevance for the simulation (output impedance, CMRR, gain-bandwidth product and relevant variations versus frequency), as specified by the device Manufacturer.

The proposed system has been simulated with 10 bit A/D and D/A converters and a 7-tap equalizer.

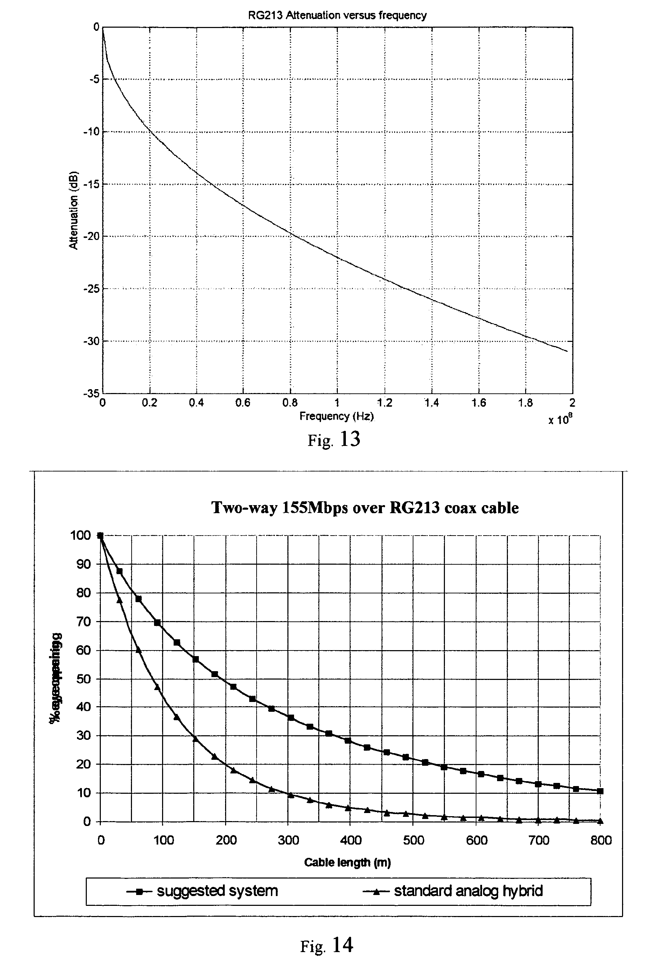

For the cable a standard RG213 type of coax cable has been taken as a significant example. Its transfer function for a 300 meter length is shown in figure 13.

The simulation results are presented in figure 14 for a throughput of 155 Mbps (STM-1 payload)

The figure shows "% eye opening" obtained with the two systems as a function of the cable length.

The "conventional" system uses a two-level Miller encoded signal, while the proposed system a four-level signal, as described in the previous section.

Taking for instance as a practical threshold limit a 20% eye opening value , the proposed system offers more than double the cable length of the "conventional" one.

Note also that for the four-level signal the additional protection provided by the forward error correction (FEC) code has been conservatively neglected in the performance comparison of figure 14. This allows indeed to predict that even longer cable distances are achievable with the proposed interface.

### Claims

1. A method to transmit high-speed digital signals and a DC signal over the same physical transmission medium (line) connecting two devices, said signals being transmitted in both directions (bi-directional), at the same time (full-duplex) and on the same bandwidth, said method comprising at least the steps of:

   — at the transmit side, processing said digital signals with a multilevel encoding;
   — at the receive side, digitally isolating the received signals from the transmitted signals;
   — digitally equalizing the received signal isolated from the transmitted signal; and
   — properly decoding said equalized signal.

2. A method according to claim 1 wherein said multilevel encoding of the transmitted signal is carried out by means of at least two different codes.

3. A method according to claim 2, wherein the most significant bits (MSB) of the multilevel signal are encoded with codes having spectral properties particularly suited for the used transmission medium (line).

4. A method according to claim 2, wherein the less significant (LSB) bits of the multilevel signal are encoded with FEC (Forward Error Correction) codes.

5. A method according to claims 2-4, wherein the spectral properties of the multilevel signal are mainly determined by the codes used for encoding the most significant bits and, in increasing order, the less significant bits are protected with codes with error correction capabilities.

6. A method according to claim 5, wherein the redundancy of the FEC codes increases in inverse order respect to the bit position, the less significant bit being the more protected one.

7. A method according to claim 2-6, wherein the encoding rate of each bit of the multilevel signal can be different. In general for a M-level signal the encoding rates are multiple or submultiple of $1/\log_2(M)$.

8. A method according to claim 1, wherein said receive signal undergoes a multi-stage decoding.

9. A method according to claim 1, wherein said transmitting multilevel signal is AC-coupled to the transmission medium so to allow the simultaneous transmission of a DC component.

10. A cable interface system in particular embodying the method according to claim 1 - 9, at least comprising:

— a multilevel encoder sub-system;
— an adaptive digital canceler sub-system;
— an adaptive digital equalizer;
— a multistage decoder sub-system;
— a clock recovery circuit.

11. A cable interface system according to claim 10 wherein the adaptive canceler subsystem is composed of two offset cancelers and a gain control to minimize the correlation between the output signal (which is the difference of the two input signals) and the transmitted multilevel signal.

12. A cable interface system according to claim 10 wherein:

I) At the transmit side:

— the multilevel signal is a four-level signal;
— the most significant bit is encoded with a Miller encoder;
— the less significant bit is encoded with a rate convolutional encoder;
— the signal is filtered with the proper raised cosine filter;
— the signal goes through a line driver.

II) At the receive side:
— two signals are sampled and digitalized, one after the line driver and the other one after the cable matching resistor;
— the two signals feed the adaptive canceler where first any residual DC component is removed by two offset cancelers and then go through a gain control which minimize the correlation between the difference of the two signals and the signal sampled after the line driver (Tx signal);
— the signal at the output of the adaptive canceler is adaptively equalized;
— the signal at the output of the equalizer is properly multistage decoded.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14